# EUROPÄISCHE PATENTSCHRIFT

(11) **EP 3 184 457 B1**
(45) Veröffentlichungstag und Bekanntmachung des Hinweises auf die Patenterteilung: **04.09.2019**
(21) Anmeldenummer: 16206676.5
(22) Anmeldetag: 23.12.2016
(51) Int. Cl.: B65D 55/02, B65D 83/06, A47J 42/40, A47J 47/01, A47J 47/04

(54) **BEHÄLTER ZUR AUFNAHME VON GEWÜRZEN MIT EINEM AUSATZELEMENT ERSTER ART ODER EINEM AUFSATZELEMENT ZWEITER ART**
CONTAINER FOR HOLDING SPICES WITH A FIRST-TYPE CLOSING ELEMENT OR A SECOND-TYPE CLOSING ELEMENT
RÉCIPIENT À ÉPICES AVEC UN ELEMENT DE FERMETURE DE PREMIER TYPE OU UN ELEMENT DE FERMETURE DE SECOND TYPE

(30) Priorität: 23.12.2015 AT 502292015
(43) Veröffentlichungstag der Anmeldung: 28.06.2017
(73) Patentinhaber: Joma Kunststofftechnik GmbH, 2345 Brunn am Gebirge (AT)
(72) Erfinder: FRIES,Rudolf, 2572 Kaumberg (AT)
(74) Vertreter: Sonn & Partner Patentanwälte

(56) Entgegenhaltungen:
- EP-A1- 0 787 660
- EP-A1- 2 829 208
- WO-A1-2010/047660
- DE-U1-202015 008 815
- FR-A1- 2 828 176
- US-A- 4 567 991
- US-A1- 2012 286 081

## Beschreibung

Die Erfindung betrifft eine Kombination eines Behälters zur Aufnahme von Gewürzen oder dergleichen mit einem Aufsatzelement erster Art oder einem Aufsatzelement zweiter Art, wobei der Behälter eine Einfüll-/Abgabeöffnung aufweist, wobei in einem Mündungsabschnitt angrenzend an die Einfüll-/Abgabeöffnung ein Gewinde zur Befestigung des Aufsatzelements erster Art oder zweiter Art vorgesehen ist und im Bereich des Mündungsabschnitts zumindest ein von einer im Wesentlichen zylindrischen Mantelfläche vorstehender Vorsprung erster Art vorgesehen ist, der eine in Umfangsrichtung wirkende Anlagefläche aufweist, wobei von dem Vorsprung erster Art in Längsrichtung des Behälters beabstandet ein weiterer Vorsprung zweiter Art von der im Wesentlichen zylindrischen Mantelfläche des Mündungsabschnitts vorsteht.

Aus dem Stand der Technik sind grundsätzlich bereits Behälter mit einem Gewinde zur Befestigung eines Aufsatzelements bzw. Behälterabschlusses bekannt, wobei es auch bekannt ist, im Bereich des Mündungsabschnitts einen oder mehrere Vorsprünge, insbesondere rampenartige Vorsprünge, vorzusehen, um ein Herabdrehen bzw. Lösen des einmal auf der Einfüll- bzw. Abgabeöffnung befestigten Aufsatzelements zu verhindern. Nachdem das Aufsatzelement sohin auf dem Behälter befestigt wurde, kann dieses somit nicht wieder (zerstörungsfrei) vom Behälter gelöst werden, sodass zugleich auch ein Originalitätsverschluss vorliegt, da ein Zugriff auf den Behälter und gegebenenfalls ein Wiederbefüllen des Behälters ohne Zerstörung des Aufsatzelements nicht möglich ist.

Aus der EP 2 829 208 A1 ist beispielsweise eine Gewürzmühle bekannt, bei welcher der feststehende Teil der Mahlvorrichtung einen federnden Arm aufweist, welcher mit einem rampenartigen Vorsprung in der Nähe der Behälteröffnung zusammenwirkt. Hierbei läuft der federnde Arm bei der Drehbewegung über den rampenartigen Vorsprung auf, wobei sodann eine Kontaktkante des federnden Arms in einem Eckbereich zwischen dem rampenartigen Vorsprung und der Mantelfläche des Behälters einhakt. Somit wird eine Drehbewegung in Abschraubrichtung verhindert.

Weiters ist aus der US 2012/0286081 A1 ein Glasbehälter mit einem derartigen rampenartigen Vorsprung im Mündungsabschnitt bekannt. Bei dieser bekannten Ausgestaltung weist auch die feststehende Komponente der Mahlvorrichtung eine entsprechende, d.h. eine im Wesentlichen gleich ausgebildete, Gegenrampe auf, wobei nach Aufdrehen der feststehenden Komponente über eine ineinandergreifende Gewindeverbindung zwischen Behälter und der feststehenden Komponente die stirnseitigen Sperrflächen der beiden Rampen, welche jeweils an einer schrägen Auflauffläche der jeweiligen Rampe anschließen, flächig aneinander liegen sollen, um - nach Möglichkeit - eine Drehung der feststehenden Komponente in Abschraubrichtung zu verhindern.

Die US 4,567,991 zeigt einen Container mit einem Deckel, welcher gegen Abschrauben gesichert ist. Der Deckel weist ein Band mit Blockierelementen auf, die mit Blockierteilen des Containers in Eingriff sind, wenn der Deckel auf dem Container befestigt ist, und weiters Verschlusselemente, die mit Verschlussteilen zusammenwirken. Um den Deckel vom Container zu entfernen, muss zuerst das Band abgerissen werden und anschließend der Deckel an zwei Druckpunkten zusammengedrückt werden, sodass der Eingriff der Verschlussteile mit den Verschlusselementen gelöst wird.

Eine ähnliche Konstruktion mit einem Sicherheitsstreifen, der bei einer Aufdrehbewegung abgerissen wird, wird von der FR 2 828 176 A1 offenbart, wobei weiters Stoppelemente vorgesehen sind, die eine vollständige Entfernung des Deckels nur unter vorherigen Druck auf den Deckel nach unten zulassen.

Eine weitere Konstruktion mit einem nicht-wiederbefestigbaren Abschnitt mit Sollbruchstelle offenbart die WO 2014/047660 A1.

Die EP 0 787 660 A1 zeigt ebenfalls einen Behälter mit einem Verschluss, der durch einen Drücken-und-Drehen-Mechanismus vom Behälter gelöst werden kann, wobei der Hals des Behälters weiters Anschläge aufweist, die die Zudrehbewegung des Verschlusses mechanisch begrenzen.

All diese bekannten Behälter mit Vorsprüngen im Mündungsabschnitt weisen den Nachteil auf, dass sie lediglich für ein einziges spezielles Aufsatzelement, insbesondere die feststehende Komponente einer Mahlvorrichtung, ausgebildet sind.

Die alternative Befestigung eines andersartigen Aufsatzelements oder Behälterabschlusses, insbesondere eines Aufsatzelements aus einem anderen (Kunststoff-)Material, ist an derartigen Behältern zwar grundsätzlich möglich, jedoch können andersartige Aufsatzelemente, beispielsweise bestehend aus einem Material geringerer Steifigkeit, nicht zuverlässig auf der in ihrer aufgeschraubten Stellung befestigten Stellung gehalten werden, sondern wieder von der Einfüll- bzw. Abgabeöffnung gelöst werden. Somit ist es erforderlich, unterschiedliche Behälter mit unterschiedlichen Mündungsabschnitten bzw. entsprechend angepassten Vorsprüngen für unterschiedliche Aufsatzelemente auszubilden; dies ist kostenintensiv und logistisch aufwendig.

Ziel der vorliegenden Erfindung ist es demzufolge, einen Behälter der eingangs angeführten Art zu schaffen, der geeignet ist, mit unterschiedlichen Aufsatzelementen, insbesondere Aufsatzelementen aus unterschiedlichen (Kunststoff-)Materialien, versehen zu werden, wobei diese unterschiedlichen Aufsatzelemente derart am Mündungsabschnitt befestigt werden können, dass ein Abschrauben nicht möglich ist, d.h. der Behälter zur Aufnahme unterschiedlicher Aufsatzelemente im Sinne eines Originalitätsverschlusses geeignet ist.

Erfindungsgemäß wird dies durch eine Kombination wie eingangs angeführt mit den Merkmalen des kennzeichnenden Teils von Anspruch 1 erzielt.

Der erfindungsgemäße Behälter weist demnach nicht nur einen oder gegebenenfalls mehrere entlang desselben Umfangs ausgebildete Vorsprünge auf, welche zur Rückdrehsicherung eines speziellen Aufsatzelements bzw. Behälterabschlusses optimiert sind, sondern sieht zusätzlich zu diesem zumindest einen Vorsprung erster Art in einem von diesem Vorsprung in Längsrichtung beabstandeten Mündungsabschnittsbereich, in welchem der Vorsprung erster Art angeordnet ist, zumindest einen Vorsprung zweiter Art auf, welcher für ein Zusammenwirken mit einem weiteren Behälterabschluss im Sinne einer Rückdrehsicherung zur Ausbildung eines Originalitätsverschlusses optimiert ist. Demzufolge können an einem einzigen Behälter unterschiedliche Behälterabschlüsse, beispielsweise ein Gewürzstreuer oder alternativ eine Mahlvorrichtung, welche aus unterschiedlichen (Kunststoff-)Materialien, vorzugsweise mit unterschiedlichen Steifigkeiten bzw. mit unterschiedlichen E-Modulen, bestehen, befestigt werden, wobei der einzige Behälter mit dem jeweiligen Behälterabschluss aufgrund des Vorliegens von mindestens zwei in Längsrichtung beabstandeten Vorsprungsarten jeweils optimiert ist. Um ein Abschrauben der unterschiedlichen Behälterabschlüsse zuverlässig zu verhindern, indem die Vorsprünge erster und/oder zweiter Art zuverlässig ihre Wirkung entfalten, ist es vorteilhaft, wenn vorzugsweise zumindest zwei, insbesondere zwei diametral gegenüberliegende, Vorsprünge erster und zweiter Art vorgesehen sind.

Wenn der Umfang des Mündungsabschnitts des jeweiligen Bereichs, von dem jeweiligen Vorsprung erster und zweiter Art vorsteht, unterschiedlich ist, wird eine besonders effiziente Rückdrehsicherung erzielt und zudem wird eine Herstellung des Behälters aus Glas prozesstechnisch vereinfacht.

Hinsichtlich einer konstruktiv einfachen Ausgestaltung des Behälters, insbesondere eines Glasbehälters, ist es zudem vorteilhaft, wenn die Vorsprünge erster und zweiter Art um einen von 90° abweichenden Winkel, vorzugsweise in einem Winkel zwischen 20° und 60°, insbesondere in einem Winkel von im Wesentlichen ca. 45°, zueinander angeordnet sind.

Um die beiden Vorsprungsarten an das jeweilige Aufsatzelement, z.B. eine Streuvorrichtung und eine Mahlvorrichtung, insbesondere bestehend aus Materialien unterschiedlicher Steifigkeiten, entsprechend anzupassen, ist es von Vorteil, wenn die Vorsprünge erster und zweiter Art unterschiedliche Breite, Längserstreckung und/oder Vorsprungshöhe aufweisen.

Um bei einem Behälterabschluss aus einem vergleichsweise weichen, d.h. weniger steifen Material, eine vergleichsweise große Anlagefläche bzw. einen vergleichsweise kleineren Auflaufwinkel anzubieten, ist es günstig, wenn der Vorsprung zweiter Art eine größere Breite und/oder größere Längserstreckung aufweist als der Vorsprung erster Art. Unter "Breite" ist hierbei die Erstreckungslänge des Vorsprungs in Längsrichtung des Behälter zu verstehen; unter "Längserstreckung" hingegen die Erstreckunglänge in Umfangsrichtung des Mündungsabschnitts.

Bei einem bevorzugten Ausführungsbeispiel können bei dem Aufsatzelement bzw. Behälterabschluss unterschiedliche Elemente vorgesehen sein, welche mit dem Vorsprung erster Art und dem Vorsprung zweiter Art zusammenwirken. So kann insbesondere für ein Zusammenwirken mit dem Vorsprung erster Art ein zungenförmiges Federelement vorgesehen sein, welches sich von einer inneren zylindrischen Mantelfläche des Aufsatzelements schräg nach Innen erstreckt, und andererseits zum Zusammenwirken mit dem Vorsprung zweiter Art ein rampenartiger Vorsprung vorgesehen sein. Da ein derartiger rampenartiger Vorsprung eine umfängliche Verformung des zylindrischen Mantelabschnitts bedingt, während dieser über dem Vorsprung am Mündungsabschnitt des Behälters aufläuft, ist es von Vorteil, wenn der Vorsprung zweiter Art eine geringere Vorsprungshöhe aufweist als der Vorsprung erster Art.

Um einerseits ein einfaches Aufschrauben zu ermöglichen und andererseits zuverlässig ein Rückdrehen bzw. Abschrauben des befestigten Behälterabschlusses zu verhindern, ist es von Vorteil, wenn der Vorsprung erster und/oder zweiter Art jeweils in Art einer Rampe ausgestaltet ist, wobei eine Auflauffläche in Aufschraubrichtung von der zylindrischen Mantelfläche des Mündungsabschnitts schräg ansteigt und an das frei auskragende Ende der Auflauffläche eine Anlagefläche, vorzugsweise in einem Winkel von ca. 90°, anschließt.

Sofern der Vorsprung zweiter Art eine Ausnehmung aufweist, wobei die Ausnehmung vorzugsweise zumindest in Umfangsrichtung der zylindrischen Mantelfläche des Mündungsabschnitts beidseitig und in Richtung der Abgabeöffnung jeweils eine Anlagefläche aufweist, können zwei grundsätzlich unterschiedlich wirkende Vorsprungsarten vorgesehen sein, wobei sodann der Vorsprung erster Art beispielsweise in der Art einer Rampe ausgestaltet sein kann, der Vorsprung zweiter Art hingegen eine Ausnehmung aufweist, welche insbesondere zur Aufnahme eines zungenförmigen Federarms geeignet ist.

Da auf dem Mündungsabschnitt ein Aufsatzelement erster Art mit Halteelementen erster und zweiter Art, welche mit Vorsprüngen beider Arten zusammenwirken, befestigbar ist und alternativ ein Aufsatzelement zweiter Art, welches zumindest ein Halteelement erster oder zweiter Art aufweist, das nur mit dem Vorsprung einer Art, vorzugsweise dem/den Vorsprung/Vorsprüngen zweiter Art, derart zusammenwirkt, dass ein werkzeugloses Entfernen des Aufsatzelements von dem Behälter verhindert wird, können insbesondere Aufsatzelemente aus unterschiedlichen (Kunststoff)Materialien mit unterschiedlichen Steifigkeiten befestigt werden. Hierbei kann insbesondere das Aufsatzelement größerer Steifigkeit bzw. Materialhärte lediglich Halteelemente aufweisen, welche nur mit dem Vorsprung einer Art zusammenwirken. Bei einem Aufsatzelement, welches aus einem Material geringerer Härte bzw. Steifigkeit besteht und somit bei geringerem Kraftaufwand bereits verformbar ist, sodass gegebenenfalls ein Abschrauben bei Zusammenwirken mit dem Vorsprung nur einer Art möglich wäre, ist es vorteilhaft, wenn ein derartiges Aufsatzelement Halteelemente erster und zweiter Art aufweist, welche zugleich mit den Vorsprüngen erster und zweiter Art zusammenwirken.

Sofern als Aufsatzelement erster Art ein Aufsatzelement, insbesondere ein Gewürzstreuer-Aufsatzelement, aus einem ersten Kunststoffmaterial und als Aufsatzelement zweiter Art ein Aufsatzelement, insbesondere ein Mahlwerk-Aufsatzelement, vorgesehen sind, wobei zumindest ein das Halteelement aufweisender Teil des Aufsatzelements zweiter Art aus einem zweiten Kunststoffmaterial besteht, das einen höheren Elastizitätsmodul als das erste Kunststoffmaterial aufweist, kann mit einem einzigen Behälter entweder ein Gewürzstreuer oder eine Gewürzmühle auf einfache Weise hergestellt werden. Vorteilhaft ist hierbei, wenn das erste Kunststoffmaterial einen Elastizitätsmodul zwischen 1000 N/mm² und 1950 N/mm², vorzugsweise zwischen 1400 N/mm² und 1800 N/mm^{2,} und das zweite Kunststoffmaterial einen Elastizitätsmodul zwischen 2000 N/mm² und 3900 N/mm², vorzugsweise zwischen 2300 N/mm² und 2800 N/mm², aufweist.

Da das Mahlwerk-Aufsatzelement üblicherweise eine höhere Materialsteifigkeit als ein Gewürzstreuer-Aufsatzelement aufweist, ist es hierbei vorteilhaft, wenn dieses Aufsatzelement lediglich ein Halteelement einer Art aufweist, wohingegen das aus einem vergleichsweise weicheren Material bestehende Gewürzstreuer-Aufsatzelement zwecks Sicherstellung, dass ein Abschrauben im Sinne eines Originalitätsverschlusses zuverlässig verhindert wird, Halteelemente für die Vorsprünge beider Arten aufweist.

Um mit jenem Vorsprung zusammenzuwirken, welcher von dem Bereich des Mündungsabschnitts geringeren Umfangs bzw. geringeren Durchmessers vorsteht und somit einen größeren Abstand zum zylindrischen Innendurchmesser des Aufsatzelements aufweist, ist es von Vorteil, wenn als Halteelement erster Art zumindest ein gegenüber einer Mantelfläche in einem Befestigungsabschnitt des Aufsatzelements elastisch verschwenkbares, vorzugsweise im Wesentlichen zungenförmiges Halteelement, vorgesehen ist.

Hingegen ist der federnde Rückstellweg von jenem Halteelement, welches mit dem Vorsprung zusammenwirkt, welcher von dem Bereich des Mündungsabschnitts größeren Umfangs bzw. größeren Durchmessers vorsteht, deutlich geringer, sodass es hierbei günstig ist, wenn als Halteelement zweiter Art zumindest eine gegenüber einer Mantelfläche in einem Befestigungsabschnitt des Aufsatzelements vorspringende Rampe vorgesehen ist. Erfindungsgemäß ist es demzufolge auf einfache Weise möglich, eine Kombination des erfindungsgemäßen Behälters und einem auf dem Mündungsabschnitt befestigten Aufsatzteil erster Art oder jedoch zweiter Art herzustellen.

Die Erfindung wird nachstehend anhand von in den Zeichnungen dargestellten bevorzugten Ausführungsbeispielen, auf welche sie jedoch keinesfalls beschränkt sein soll, noch näher erläutert. Im Einzelnen zeigen in den Zeichnungen:
Fig. 1 eine perspektivische Ansicht eines erfindungsgemäßen Behälters mit einem Mündungsabschnitt;
Fig. 2 eine Seitenansicht auf den Mündungsabschnitt gemäß Fig. 1;
Fig. 3 eine Draufsicht auf den Mündungsabschnitt gemäß Fig. 1;
Fig. 4 eine perspektivische Ansicht von unten auf ein Gewürzstreuer-Aufsatzelement;
Fig. 5 eine Untersicht des Gewürzstreuer-Aufsatzelements gemäß Fig. 4;
Fig. 6 eine Seitenansicht des Gewürzstreuerelements gemäß den Fig. 4 und 5;
Fig. 7 einen Schnitt gemäß der Linie VII-VII in Fig. 6;
Fig. 8 einen Schnitt gemäß der Linie VIII-VIII in Fig. 6;
Fig. 9 eine perspektivische Ansicht eines Mahlvorrichtungsaufsatzelements;
Fig. 10 eine perspektivische Ansicht von unten auf das Aufsatzelement gemäß Fig. 9;
Fig. 11 eine Ansicht von unten des Aufsatzelements gemäß Fig. 9;
Fig. 12 eine Seitenansicht des Seitenaufsatzelements gemäß Fig. 9;
Fig. 13 einen Schnitt gemäß der Linie XIII-XIII in Fig. 12;
Fig. 14 ein alternatives Ausführungsbeispiel eines erfindungsgemäßen Mündungsabschnitts eines Behälters;
Fig. 15 eine Seitenansicht des Mündungsabschnitts gemäß Fig. 14;
Fig. 16 eine Draufsicht auf den Mündungsabschnitt gemäß den Fig. 14 und 15;
Fig. 17 eine Schnittansicht vergleichbar mit der Ansicht gemäß Fig. 7, jedoch mit dem Mündungsabschnitt gemäß Fig. 14;
Fig. 18 eine Schnittansicht ähnlich Fig. 8, jedoch mit einem Mündungsabschnitt gemäß Fig. 14;
Fig. 19 eine perspektivische Ansicht von unten auf ein alternatives Ausführungsbeispiel eines Mahlvorrichtungsaufsatzelements;
Fig. 20 eine Seitenansicht des Aufsatzelements gemäß Fig. 19;
Fig. 21 eine Schnittansicht gemäß der Linie XXI-XXI in Fig. 20; und
Fig. 22 eine Schnittansicht gemäß der Linie XXII-XXII in Fig. 20.

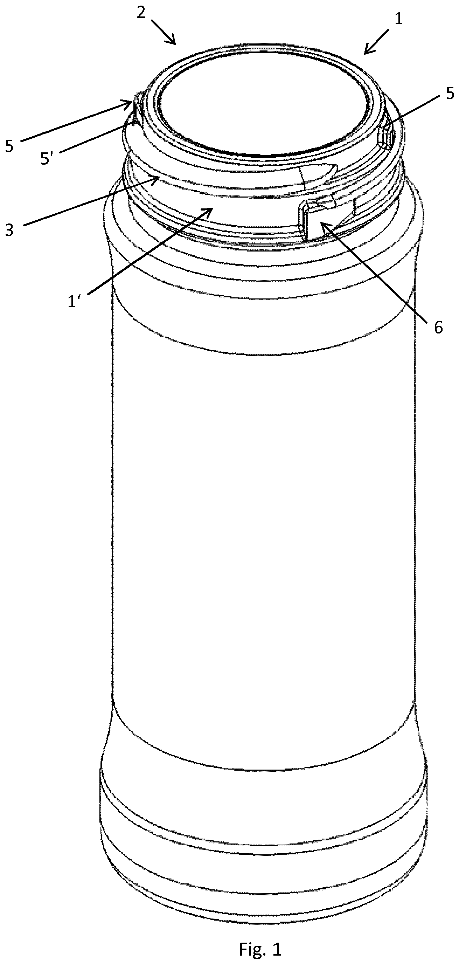

Fig. 1 zeigt einen Mündungsabschnitt 1 eines Behälters 2 zur Aufnahme von Gewürzen oder dergleichen. In dem Mündungsabschnitt 1 ist eine zylindrische Mantelfläche 1' mit einem zweigängigen Gewinde 3 vorgesehen, wobei in einem an eine obere Einfüll- bzw. Abgabeöffnung 4 angrenzenden oberen Endabschnitt ein von der zylindrischen Mantelfläche 1' vorstehender rampenförmiger Vorsprung 5 erster Art vorgesehen ist. Dieser Vorsprung 5 ist in einem oberen Endabschnitt vorgesehen, welcher einen kleineren Umfang bzw. Durchmesser aufweist als ein von der Öffnung 4 weiter abliegender Mündungsabschnittsbereich, in welchem ein weiterer rampenartiger Vorsprung 6 zweiter Art angeordnet ist.

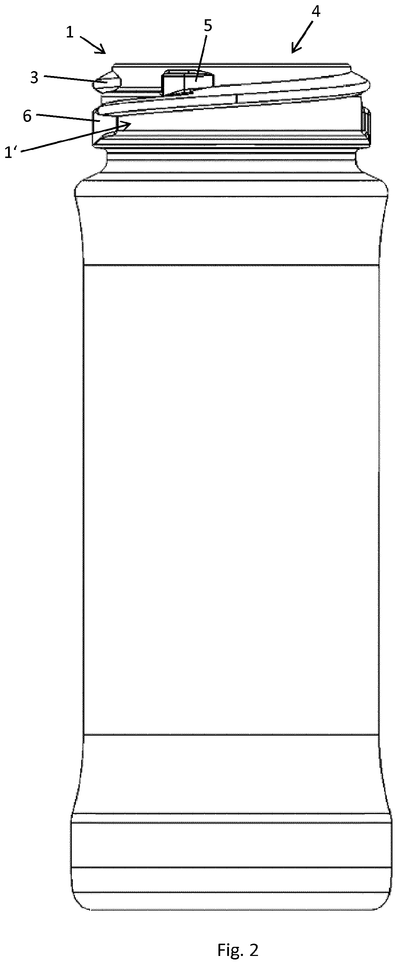

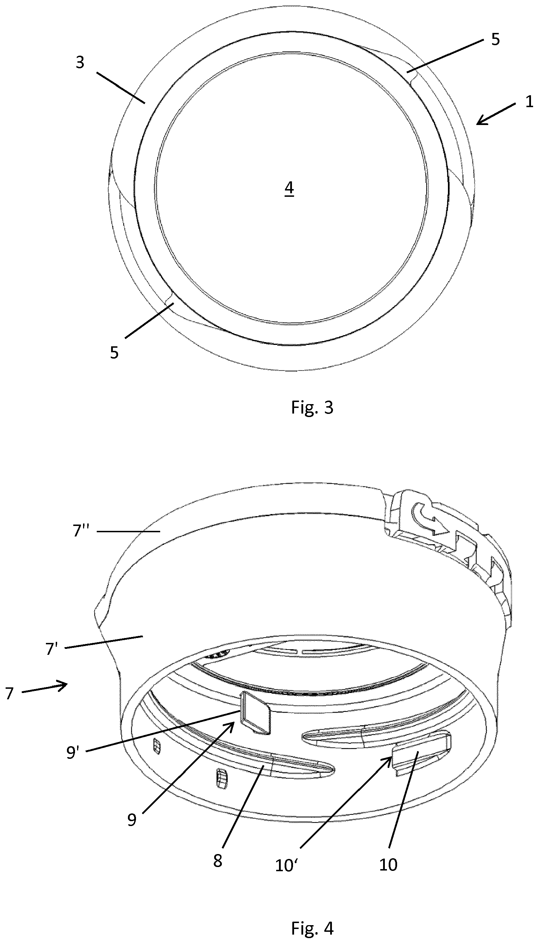

Bei dem gezeigten Ausführungsbeispiel sind von dem Vorsprung 5 und Vorsprung 6 jeweils zwei diametral gegenüberliegende Vorsprünge 5, 6 vorgesehen, wobei der Vorsprung 5 erster Art zu dem Vorsprung 6 zweiter Art, wie insbesondere in den Fig. 2 und 3 ersichtlich, um ca. 45° versetzt angeordnet ist.

Eine derartig versetzte Anordnung der in Längserstreckung des Behälters 2 beabstandet zueinander angeordneten Vorsprünge 5, 6 unterschiedlicher Art ist insbesondere bei der Herstellung des Behälters 2 aus Glas aus fertigungstechnischen Gründen vorteilhaft.

Wie weiters in den Fig. 1 bis 3 ersichtlich, sind die Vorsprünge 5 und 6 nicht nur im Bereich unterschiedlicher (Außen)Durchmesser des Mündungsabschnitts 1 angeordnet, sondern unterscheiden sich auch in ihrer Breite, d.h. in ihrer Erstreckunglänge in Längsrichtung des Behälters 2. Die unterschiedliche Ausgestaltung der Vorsprünge 5, 6 dient insbesondere zum Zusammenwirken mit unterschiedlich ausgebildeten Halteelementen eines Aufsatzelements.

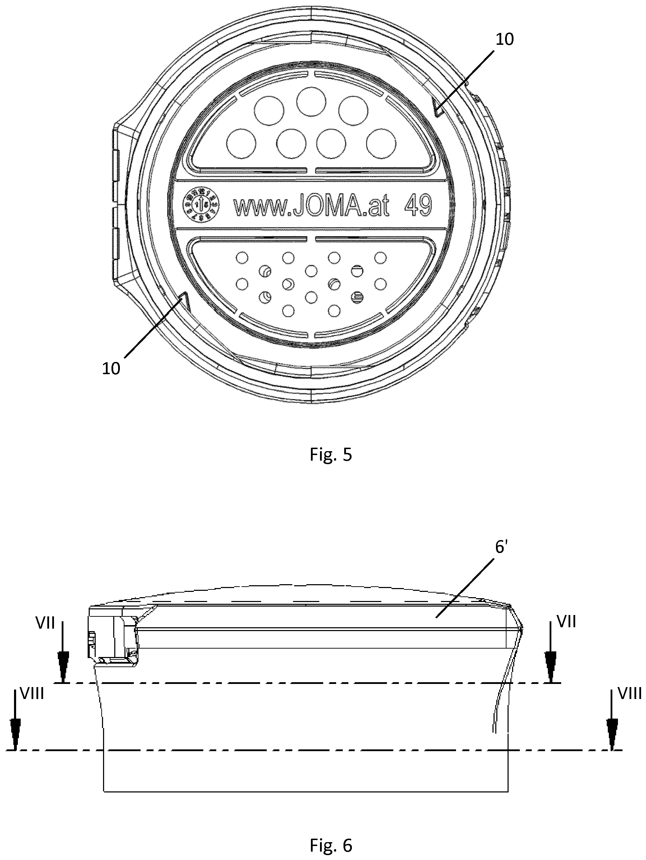

In den Fig. 4 bis 8 ist ein Aufsatzelement erster Art in Form eines Gewürzstreuer-Aufsatzelements 7 gezeigt. Hierbei ist ersichtlich, dass ein im Wesentlichen zylindrischer Aufsatzteil 7' an seiner Innenseite ein zweigängiges Gewinde 8 zwecks Verbindung mit dem zweigängigen Gewinde 3 am Mündungsabschnitt 1 des Behälters 2 aufweist.

Um das Gewürzstreuer-Aufsatzelement 7 nach Aufschrauben zuverlässig mit dem Mündungsabschnitt 1 zu verbinden, d.h. ein ungewolltes Lösen bzw. Abschrauben von dem Mündungsabschnitt 1 zu verhindern, so dass das Gewürzstreuer-Aufsatzelement 7 zugleich als Originalitätsverschluss dient, sind an der Innenseite einer zylindrischen Mantelfläche des Aufsatzteils 7' Halteelemente 9, 10 unterschiedlicher Art vorgesehen, welche für ein Zusammenwirken mit den Vorsprüngen 5, 6 am Mündungsabschnitt 1 vorgesehen sind, sodass ein Abschrauben des Gewürzstreuer-Aufsatzelements 7 zuverlässig verhindert wird.

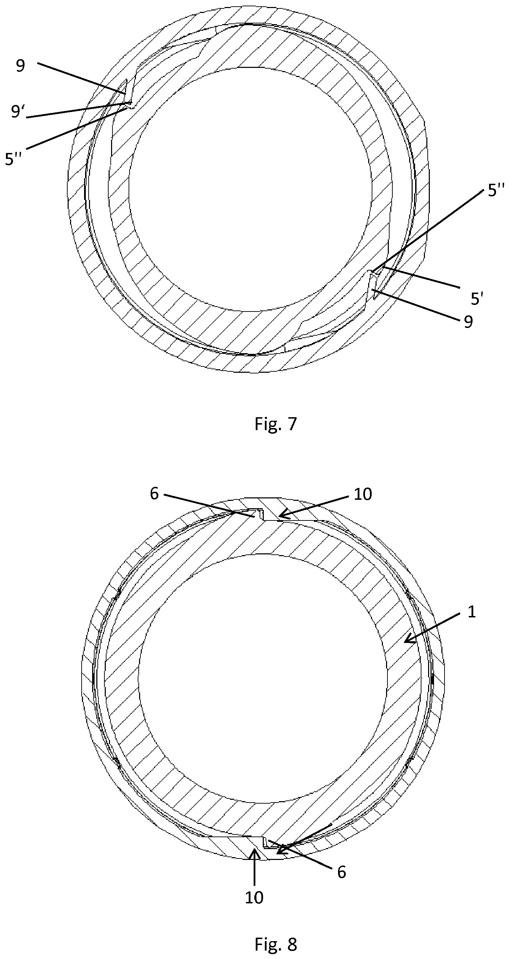

Das Halteelement 9 erster Art ist hierbei als im Wesentlichen zungenförmiges Federelement ausgebildet, welches von einem Verbindungsabschnitt mit dem zylindrischen Aufsatzteil 7' schräg nach innen vorspringt. Demnach kann das zungenförmige Halteelement 9 während des Aufschraubens über den rampenförmigen Vorsprung 5 gleiten, wobei hierbei während des Auflaufens auf einer Auflauffläche 5' des Vorsprungs 5 das Halteelement 9 elastisch verformt wird, so dass eine vordere Anlagekante 9' des Halteelements 9 hierbei in Richtung der zylindrischen Mantelfläche des Aufsatzteils 7' nach außen bewegt wird. Nach Überstreifen der Auflauffläche 5' des Vorsprungs 5 schnappt das zungenförmige Halteelement 9 in seine in Fig. 4 gezeigte Position zurück, sodass das Halteelement 9 bzw. die Anlagekante 9', wie insbesondere in Fig. 7 ersichtlich, jeweils an einer Anlageflächen 5'' des jeweiligen Vorsprungs 5 zum Anschlag gelangt.

Da derartige Gewürzstreuer-Aufsatzelemente 7 jedoch aus einem vergleichsweise weichem, d.h. mit geringem Kraftaufwand verformbaren, Kunststoffmaterial, insbesondere Polypropylen (PP), mit einem Elastizitätsmodul zwischen 1000 N/mm² und 1950 N/mm², ausgebildet sind, könnten die Halteelemente 9 derart verformt werden, dass sie sich aus ihrer Anlage an den Anlageflächen 5'' der Vorsprünge 5 gegebenenfalls wieder lösen und das Gewürzstreuer-Aufsatzelement 7 sohin wieder vom Mündungsabschnitt 1 gelöst wird.

Um dies zuverlässig zu vermeiden, weist das Gewürzstreuer-Aufsatzelement 7 Halteelemente 10 zweiter Art in Form von rampenförmigen Vorsprüngen 10 auf, welche in ihrer Form im Wesentlichen den Vorsprüngen 6 zweiter Art im Mündungsabschnitt 1 des Behälters 2 entsprechen.

Wie in Fig. 8 ersichtlich, wirken sodann in einer anderen Querschnittsebene und zudem umfangsmäßig versetzt zu den anderen Halteelementen weitere Halteelemente 10 mit den Vorsprüngen 6 des Mündungsabschnitts 1 zusammen, sodass ein Abschrauben des Gewürzstreuer-Aufsatzelements 6 zuverlässig verhindert wird.

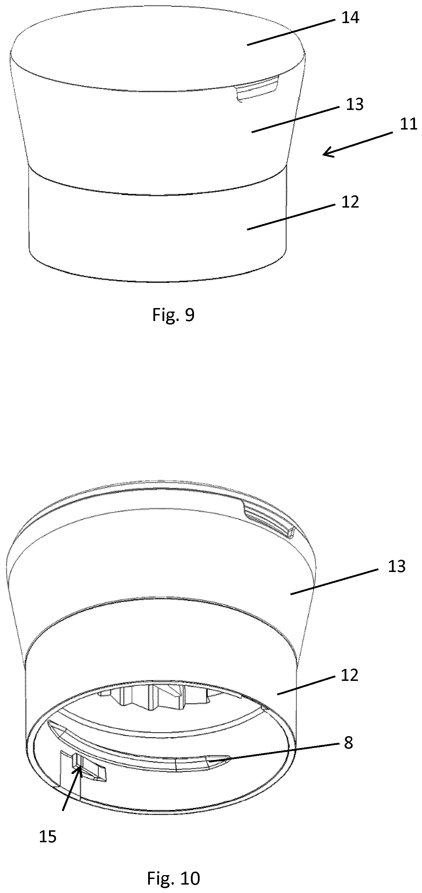

Auf dem gleichen Mündungsabschnitt 1 wie in Fig. 1 bis 3 dargestellt kann alternativ auch ein anderes Aufsatzelement zweiter Art, insbesondere das in den Fig. 9 bis 13 gezeigte Mahlvorrichtung-Aufsatzelement 11, befestigt werden.

Dieses Mahlvorrichtung-Aufsatzelement 11 weist einen Stator 12 und einen Rotor 13 sowie eine Abdeckkappe 14 auf, wobei der Stator 12 als Aufsatzteil ausgebildet ist und in einem zylindrischen Befestigungsabschnitt innenseitig ein zweigängiges Gewinde 8 zwecks Verbindung mit dem zweigängigen Gewinde 3 des Mündungsabschnitts 1 des Behälters aufweist.

Derartigen Mahlvorrichtungen 11 bestehen insbesondere aus Stator 12 und Rotor 13, vorzugsweise aus einem Kunststoffmaterial, insbesondere Polyoxymethylen (POM), Polycarbonat (PC), oder Polymilchsäure (PLA), mit einem E-Modul zwischen 2000 N/mm² und 3900 N/mm², vorzugsweise zwischen 2300 N/mm² und 2800 N/mm², welches gegenüber dem Kunststoffmaterial des Gewürzstreuer-Aufsatzelements 6 sohin eine höhere Steifigkeit aufweist.

Demzufolge ist ein derartiges Aufsatzelement 11 schwieriger von dem Mündungsabschnitt 1 zu lösen, da die Eigenelastizität des Materials deutlich geringer ist und somit nach Vorliegen einer Rast- bzw. Schnappverbindung zwischen einem Halteelement 10 und einem der Vorsprünge 5, 6 ein Lösen einer derartigen Verbindung deutlich schwieriger ist.

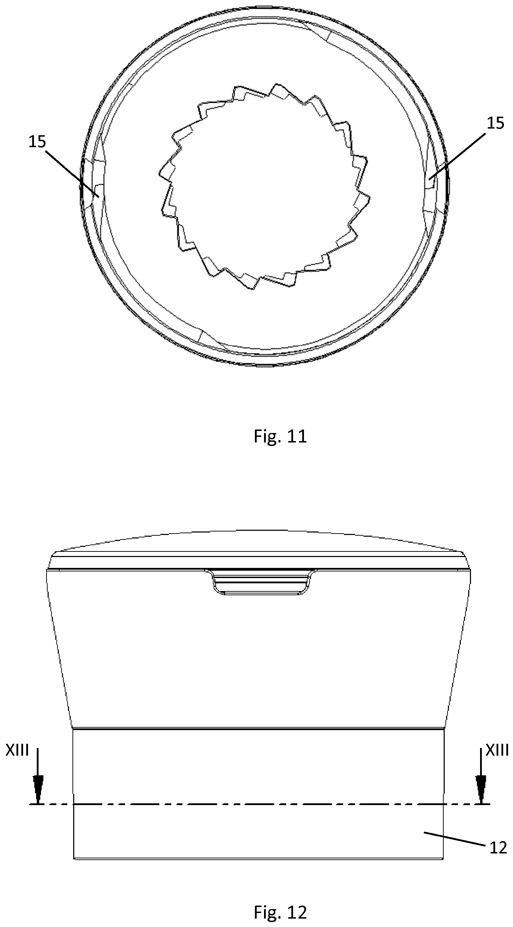

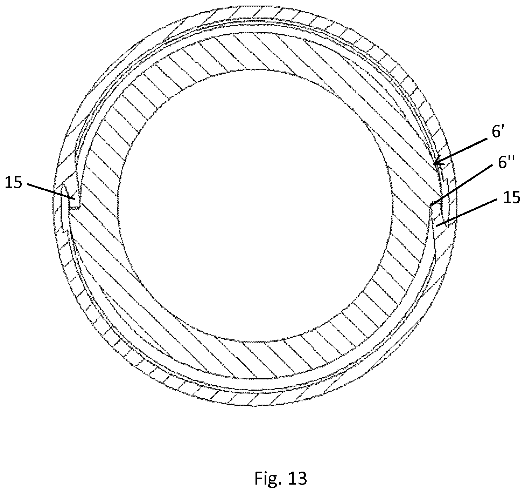

Wie in Fig. 11 ersichtlich, sind demzufolge vorzugsweise lediglich diametral gegenüber angeordnete zungenförmige Federelemente 15 vorgesehen, welche mit entsprechend diametral gegenüberliegenden Vorsprüngen 6 des Mündungsabschnitts 1 - wie in Fig. 13 ersichtlich - zusammenwirken. Demnach laufen auch hier - ähnlich wie im Zusammenhang mit den Halteelementen 9 bereits beschrieben - die zungenförmigen Halteelemente 15 unter einem federnden, nach außen Schwenken in Richtung des Mantelabschnitts des Aufsatzteils 12 über Auflaufflächen 6', bis sie - am Ende der Auflaufflächen 6' - aufgrund ihrer elastischen Rückstellkraft nach außen schwenken und somit an entsprechenden Anlageflächen 6" der Vorsprünge 6 zur Anlage gelangen. Aufgrund der vergleichsweise hohen Steifigkeit des Kunststoffmaterials ist somit sichergestellt, dass das Mahlvorrichtung-Aufsatzelement 11 zuverlässig auf dem Mündungsabschnitt 1 befestigt ist und somit zugleich als Originalitätsverschluss wirkt.

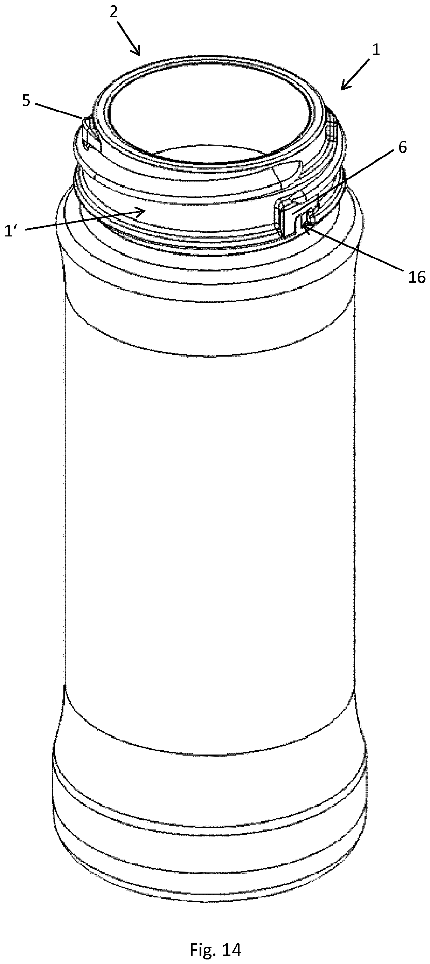

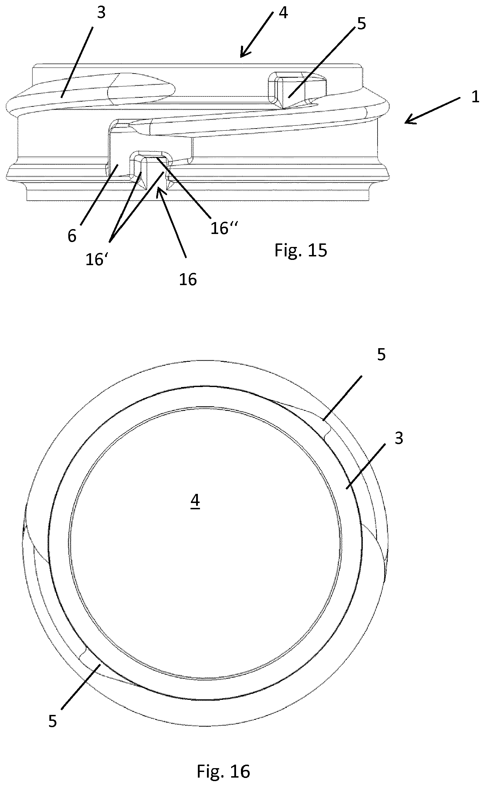

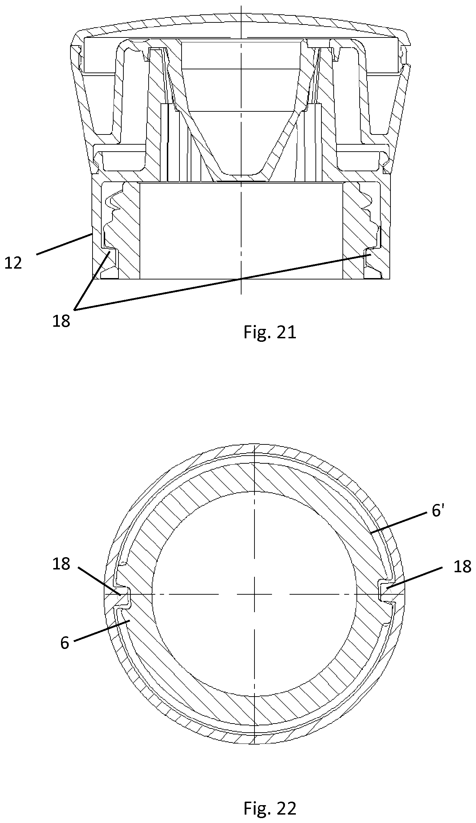

In den Fig. 14 bis 22 ist ein weiteres Ausführungsbeispiel des erfindungsgemäßen Behälters 2 mit einem Mündungsabschnitt 1 gezeigt.

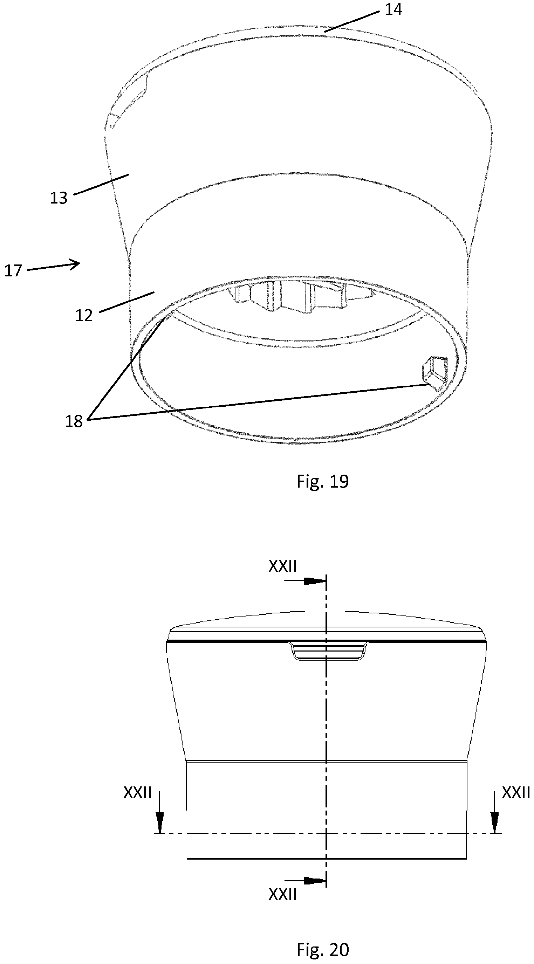

Hierbei weist der Vorsprung 6 zweiter Art jeweils eine Ausnehmung 16 zur Aufnahme eines zungenförmigen Halteelements 15 auf, über welche sodann nicht nur in Umfangsrichtung eine Drehbewegung in Abschraubrichtung blockiert wird, sondern mit welchen ein Aufsatzelement 17 (vgl. Fig. 19) auch in Längsrichtung des Behälters 2 gesichert ist. Die Ausnehmung 16 weist hierbei in Umfangrichtung wirkende Anlageflächen 16' und eine in Längsrichtung des Behälters 2 wirkende Anlagefläche 16" auf.

Abgesehen von der Ausnehmung 16 entspricht die Ausgestaltung des Mündungsabschnitts 1 im Wesentlichen jenem des ersten Ausführungsbeispiels, sodass zwecks Vermeidung von Wiederholungen auf vorstehende Ausführungen verwiesen wird.

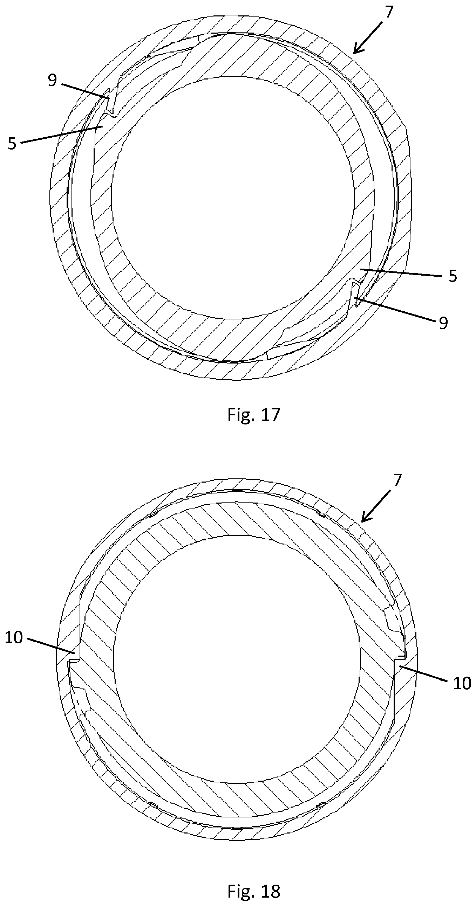

Wie insbesondere in den Fig. 17 und 18 ersichtlich, kann demnach ein Gewürzstreuer-Aufsatzelement vollkommen analog zu der in der vorstehend beschriebenen Art und Weise auf den Mündungsabschnitt 1 gemäß Fig. 14 in einer Art und Weise befestigt werden, in der ein Abschrauben des Gewürzstreuer-Aufsatzelements 7 nicht mehr möglich ist. Auch hier hintergreifen die zungenförmigen Halteelemente 9 jeweils die rampenförmigen Vorsprünge 5 im Mündungsabschnitt, ebenso wie die rampenförmigen Halteelemente 10 an den Anlageflächen 6' der rampenförmigen Vorsprünge 6 im Mündungsabschnitt 1 anliegen.

Wie in Fig. 19 bis 22 gezeigt, weist ein alternatives Mahlvorrichtung-Aufsatzelement 17 hingegen an der inneren Mantelfläche des Aufsatzteils 12 ausgebildeten Stators 12 keine zungenförmigen Halteelemente 15, wie beim ersten Ausführungsbeispiel, auf, sondern im Wesentlichen prismen- bzw. quaderförmige Halteelemente in Form von Nocken 18. Diese Nocken 18 können beim Aufschrauben des Stators 12 auf den Mündungsabschnitt 1 über die Auflaufflächen 6' der Vorsprünge 6 gleiten und schnappen sodann in die jeweiligen Ausnehmung 16. Somit sind die Nocken 18 gegen eine umfängliches Verdrehen über Anlageflächen 16' und gegen ein Bewegung in Längsrichtung jeweils über die Anlagefläche 16" gesichert.

Hierbei sind jeweils zwei diametral gegenüberliegende Ausnehmungen 16 sowie Nocken 18 vorgesehen, sodass der Stator 12 des Mahlvorrichtung-Aufsatzelements 17 auf den Mündungsabschnitt 1 nicht nur in Umfangsrichtung, sondern auch in Längsrichtung des Behälters 2 - ohne eine zusätzliche Gewindeverbindung - in zuverlässiger Weise gesichert ist.

Aufgrund der beiden Vorsprünge 5, 6 unterschiedlicher Art können somit auf einem Behälter 2 mit identischem Mündungsabschnitt 1 unterschiedliche Aufsatzelemente 7; 11, 17 befestigt werden, welche zugleich als Originalitätsverschluss dienen.

## Patentansprüche

1. Kombination eines Behälters (2) zur Aufnahme von Gewürzen oder dergleichen mit einem Aufsatzelement (7) erster Art oder einem Aufsatzelement (11; 17) zweiter Art, wobei der Behälter eine Einfüll-/Abgabeöffnung (4) aufweist, wobei in einem Mündungsabschnitt (1) angrenzend an die Einfüll-/Abgabeöffnung (4) ein Gewinde (3) zur Befestigung des Aufsatzelements erster Art oder zweiter Art (7, 11) vorgesehen ist und im Bereich des Mündungsabschnitts (1) zumindest ein von einer im Wesentlichen zylindrischen Mantelfläche (1') des Mündungsabschnitts (1) vorstehender Vorsprung (5) erster Art vorgesehen ist, der eine in Umfangsrichtung wirkende Anlagefläche (5'') aufweist, wobei von dem Vorsprung erster Art (5) in Längsrichtung des Behälters (2) beabstandet ein weiterer Vorsprung (6) zweiter Art von der im Wesentlichen zylindrischen Mantelfläche (1') des Mündungsabschnitts (1) vorsteht, **dadurch gekennzeichnet, dass** auf dem Mündungsabschnitt (1) das Aufsatzelement (7) erster Art mit Halteelementen (9, 10) erster und zweiter Art, welche mit den Vorsprüngen (5, 6) beider Arten derart zusammenwirken, befestigbar ist und alternativ das Aufsatzelement (11, 17) zweiter Art, welches zumindest ein Halteelement (9, 10; 18) erster oder zweiter Art aufweist, das nur mit dem Vorsprung (5, 6) einer Art, derart zusammenwirkt, dass ein werkzeugloses Entfernen des Aufsatzelements (7; 11, 17) erster und zweiter Art von dem Behälter (2) verhindert wird, wobei das Aufsatzelement (7) erster Art oder das Aufsatzelement (11, 17) zweiter Art auf dem Mündungsabschnitt (1) des Behälters (2) befestigt ist, so dass ein werkzeugloses Entfernen des Aufsatzelements (7) erster Art oder des Aufsatzelements (11, 17) zweiter Art verhindert wird.

2. Kombination nach Anspruch 1, **dadurch gekennzeichnet, dass** der Umfang der zylindrischen Mantelfläche (1') des Mündungsabschnitts (1) des jeweiligen Bereichs, von dem der Vorsprung erster (5) und zweiter Art (6) vorsteht, unterschiedlich ist.

3. Kombination nach Anspruch 1 oder 2, **dadurch gekennzeichnet, dass** zumindest zwei, insbesondere zwei diametral gegenüberliegende, Vorsprünge (5, 6) erster und zweiter Art vorgesehen sind.

4. Kombination nach einem der Ansprüche 1 bis 3, **dadurch gekennzeichnet, dass** die Vorsprünge (5, 6) erster und zweiter Art um einen von 90° abweichenden Winkel, vorzugsweise in einem Winkel zwischen 20° und 60°, insbesondere in einem Winkel von im Wesentlichen ca. 45°, zueinander angeordnet sind.

5. Kombination nach einem der Ansprüche 1 bis 4, **dadurch gekennzeichnet, dass** die Vorsprünge (5, 6) erster und zweiter Art unterschiedliche Breite, Längserstreckung und/oder Vorsprungshöhe aufweisen.

6. Kombination nach Anspruch 5, **dadurch gekennzeichnet, dass** der Vorsprung (6) zweiter Art eine größere Breite und/oder größere Längserstreckung aufweist als der Vorsprung (5) erster Art und/oder die Vorsprungshöhe des Vorsprungs (6) zweiter Art kleiner ist als eine Vorsprungshöhe des Vorsprungs (5) erster Art.

7. Kombination nach einem der Ansprüche 1 bis 6, **dadurch gekennzeichnet, dass** der Vorsprung (5, 6) erster und/oder zweiter Art jeweils in Art einer Rampe ausgestaltet ist, wobei eine Auflauffläche (5', 6') in Aufschraubrichtung von einer zylindrischen Mantelfläche (1') des Mündungsabschnitts (1) schräg ansteigt und an das frei auskragende Ende der Auflauffläche (5', 6') eine Anlagefläche (5'', 6''), vorzugsweise in einem Winkel von ca. 90°, anschließt.

8. Kombination nach einem der Ansprüche 1 bis 7, **dadurch gekennzeichnet, dass** der Vorsprung (6) zweiter Art eine Ausnehmung (16) aufweist, wobei die Ausnehmung (16) vorzugsweise zumindest in Umfangsrichtung der zylindrischen Mantelfläche (1') des Mündungsabschnitts (1) beidseitig und in Richtung der Abgabeöffnung (4) jeweils eine Anlagefläche (16', 16'') aufweist.

9. Kombination nach einem der Ansprüche 1 bis 8, **dadurch gekennzeichnet, dass** das zumindest eine Halteelement (9, 10; 18) erster oder zweiter Art des Aufsatzelementes (11, 17) zweiter Art nur mit dem/den Vorsprung/Vorsprüngen (6) zweiter Art zusammenwirkt.

10. Kombination nach einem der vorhergehenden Ansprüche, **dadurch gekennzeichnet, dass** als Aufsatzelement erster Art ein Aufsatzelement (7), insbesondere ein Gewürzstreuer-Aufsatzelement, aus einem ersten Kunststoffmaterial und als Aufsatzelement (11, 17) zweiter Art ein Aufsatzelement, insbesondere ein Mahlwerk-Aufsatzelement, vorgesehen sind, wobei zumindest ein das Halteelement (9, 18) aufweisender Teil des Aufsatzelements (11, 17) zweiter Art aus einem zweiten Kunststoffmaterial besteht, das einen höheren Elastizitätsmodul als das erste Kunststoffmaterial aufweist.

11. Kombination nach Anspruch 10, **dadurch gekennzeichnet, dass** das erste Kunststoffmaterial einen Elastizitätsmodul zwischen 1000 N/mm² und 1950 N/mm², vorzugsweise zwischen 1400 N/mm² und 1800 N/mm^{2,} und das zweite Kunststoffmaterial einen Elastizitätsmodul zwischen 2000 N/mm² und 3900 N/mm², vorzugsweise zwischen 2300 N/mm² und 2800 N/mm², aufweist.

12. Kombination nach einem der vorhergehenden Ansprüche, **dadurch gekennzeichnet, dass** als Halteelement (9) erster Art zumindest ein gegenüber einer Mantelfläche in einem Befestigungsabschnitt des Aufsatzelements elastisch verschwenkbares, vorzugsweise im Wesentlichen zungenförmiges, Halteelement vorgesehen ist.

13. Kombination nach einem der vorhergehenden Ansprüche, **dadurch gekennzeichnet, dass** als Halteelement (10) zweiter Art zumindest eine gegenüber einer Mantelfläche in einem Befestigungsabschnitt des Aufsatzelements (7) vorspringende Rampe vorgesehen ist.

## Claims

1. Combination of a container (2) for receiving spices or the like and an attachment element (7) of a first type or an attachment element (11; 17) of a second type, the container having a filling/dispensing opening (4), a thread (3) for fastening the attachment element of the first type or second type (7, 11) being provided in a mouth portion (1) adjacent to the filling/dispensing opening (4), and at least one projection (5) of the first type being provided in the region of the mouth portion (1), which projection protrudes from a substantially cylindrical lateral surface (1') of the mouth portion (1) and has a contact surface (5") which acts in the circumferential direction, an additional projection (6) of the second type, spaced apart from the projection of the first type (5) in the longitudinal direction of the container (2), protruding from the substantially cylindrical lateral surface (1') of the mouth portion (1), **characterised in that** the attachment element (7) of the first type can be fastened to the mouth portion (1) by means of holding elements (9, 10) of the first and second type which cooperate with the projections (5, 6) of the two types in this way, and alternatively the attachment element (11, 17) of the second type which has at least one holding element (9, 10; 18) of the first or second type which only cooperates with one type of projection (5, 6) such that a tool-free removal of the attachment element (7; 11, 17) of the first and second type from the container (2) is prevented, the attachment element (7) of the first type or the attachment element (11, 17) of the second type being fastened to the mouth portion (1) of the container (2) such that a tool-free removal of the attachment element (7) of the first type or of the attachment element (11, 17) of the second type is prevented.

2. Combination according to claim 1, **characterised in that** the circumference of the cylindrical lateral surface (1') of the mouth portion (1) of the relevant region from which the projection of the first (5) and second type (6) protrudes is different.

3. Combination according to either claim 1 or claim 2, **characterised in that** at least two, in particular two diametrically opposite projections (5, 6) of the first and second type are provided.

4. Combination according to any of claims 1 to 3, **characterised in that** the projections (5, 6) of the first and second type are arranged with respect to one another at an angle other than 90°, preferably at an angle between 20° and 60°, in particular at an angle of substantially approximately 45°.

5. Combination according to any of claims 1 to 4, **characterised in that** the projections (5, 6) of the first and second type have different widths, longitudinal extensions and/or projection heights.

6. Combination according to claim 5, **characterised in that** the projection (6) of the second type has a greater width and/or greater longitudinal extension than the projection (5) of the first type, and/or the projection height of the projection (6) of the second type is smaller than a projection height of the projection (5) of the first type.

7. Combination according to any of claims 1 to 6, **characterised in that** the projection (5, 6) of the first and/or second type is designed in each case in the form of a ramp, a run-up surface (5', 6') rising obliquely in the unscrewing direction from a cylindrical lateral surface (1') of the mouth portion (1), and a contact surface (5", 6") connecting to the freely projecting end of the run-up surface (5', 6'), preferably at an angle of approximately 90°.

8. Combination according to any of claims 1 to 7, **characterised in that** the projection (6) of the second type has a recess (16), the recess (16) in each case having a contact surface (16', 16") preferably at least in the circumferential direction of the cylindrical lateral surface (1') of the mouth portion (1) on both sides and in the direction of the dispensing opening (4).

9. Combination according to any of claims 1 to 8, **characterised in that** the at least one holding element (9, 10; 18) of the first or second type of the attachment element (11, 17) of the second type only cooperates with the projection(s) (6) of the second type.

10. Combination according to any of the preceding claims, **characterised in that** an attachment element (7), in particular a spice shaker attachment element, consisting of a first plastics material is provided as an attachment element of the first type, and an attachment element, in particular a grinder attachment element, is provided as an attachment element (11, 17) of the second type, at least one part of the attachment element (11, 17) of the second type, which part has the holding element (9, 18), consisting of a second plastics material which has a higher modulus of elasticity than the first plastics material.

11. Combination according to claim 10, **characterised in that** the first plastics material has a modulus of elasticity between 1000 N/mm² and 1950 N/mm², preferably between 1400 N/mm² and 1800 N/mm², and the second plastics material has a modulus of elasticity between 2000 N/mm² and 3900 N/mm², preferably between 2300 N/mm² and 2800 N/mm².

12. Combination according to any of the preceding claims, **characterised in that**, as a holding element (9) of the first type, at least one holding element is provided which is elastically pivotable with respect to a lateral surface in a fastening portion of the attachment element and is preferably substantially tongue-shaped.

13. Combination according to any of the preceding claims, **characterised in that**, as a holding element (10) of the second type, at least one ramp is provided which projects with respect to a lateral surface in a fastening portion of the attachment element (7).

## Revendications

1. Combinaison d'un récipient (2) pour la réception d'épices ou similaire avec un élément rapporté (7) de premier type ou un élément rapporté (11 ; 17) de deuxième type, dans laquelle le récipient présente une ouverture de remplissage/décharge (4), dans laquelle un filet (3) pour la fixation de l'élément rapporté de premier type ou de deuxième type (7, 11) est prévu dans une section d'embouchure (1) de manière adjacente à l'ouverture de remplissage/décharge (4) et au moins une saillie (5) de premier type dépassant d'une surface d'enveloppe (1') sensiblement cylindrique de la section d'embouchure (1), qui présente une surface d'application (5") agissant dans la direction circonférentielle, est prévue dans la zone de la section d'embouchure (1), dans laquelle une autre saillie (6) de deuxième type dépasse de la surface d'enveloppe (1') sensiblement cylindrique (1) de la section d'embouchure (1) à distance de la saillie de premier type (5) dans la direction longitudinale du récipient (2), **caractérisée en ce que** l'élément rapporté (7) de premier type peut être fixé avec des éléments de retenue (9, 10) de premier et deuxième type, lesquels coopèrent avec les saillies (5, 6) des deux types, sur la section d'embouchure (1) et en variante l'élément rapporté (11, 17) de deuxième type, lequel présente au moins un élément de retenue (9, 10 ; 18) de premier ou deuxième type, qui coopère seulement avec la saillie (5, 6) d'un type de telle sorte qu'un retrait sans outil de l'élément rapporté (7 ; 11, 17) de premier et deuxième type du récipient (2) soit empêché, dans laquelle l'élément rapporté (7) de premier type ou l'élément rapporté (11, 17) de deuxième type est fixé sur la section d'embouchure (1) du récipient (2) de sorte qu'un retrait sans outil de l'élément rapporté (7) de premier type ou de l'élément rapporté (11, 17) de deuxième type soit empêché.

2. Combinaison selon la revendication 1, **caractérisée en ce que** la circonférence de la surface d'enveloppe cylindrique (1') de la section d'embouchure (1) de la zone respective de laquelle de la saillie de premier (5) et deuxième type (6) dépasse est différente.

3. Combinaison selon la revendication 1 ou 2, **caractérisée en ce qu'**au moins deux saillies (5, 6) de premier et deuxième type, en particulier diamétralement opposées, sont prévues.

4. Combinaison selon l'une des revendications 1 à 3, **caractérisée en ce que** les saillies (5, 6) de premier et deuxième type sont agencées l'une par rapport à l'autre à un angle divergeant de 90°, de préférence selon un angle entre 20° et 60°, en particulier selon un angle de sensiblement environ 45°.

5. Combinaison selon l'une des revendications 1 à 4, **caractérisée en ce que** les saillies (5, 6) de premier et deuxième type présentent une largeur, extension longitudinale et/ou hauteur de saillie différente.

6. Combinaison selon la revendication 5, **caractérisée en ce que** la saillie (6) de deuxième type présente une plus grande largeur et/ou une plus grande extension longitudinale que la saillie (5) de premier type et/ou la hauteur de saillie de la saillie (6) de deuxième type est inférieure à une hauteur de saillie de la saillie (5) de premier type.

7. Combinaison selon l'une des revendications 1 à 6, **caractérisée en ce que** la saillie (5, 6) de premier et/ou deuxième type est réalisée respectivement à la manière d'une rampe, dans laquelle une surface d'attaque (5', 6') augmente en biais dans la direction de vissage depuis une surface d'enveloppe cylindrique (1') de la section d'embouchure (1) et une surface d'application (5'', 6'') se raccorde à l'extrémité en porte-à-faux libre de la surface d'attaque (5', 6'), de préférence selon un angle d'environ 90°.

8. Combinaison selon l'une des revendications 1 à 7, **caractérisée en ce que** la saillie (6) de deuxième type présente un évidement (16), dans laquelle l'évidement (16) présente de préférence au moins dans la direction circonférentielle de la surface d'enveloppe cylindrique (1') de la section d'embouchure (1) des deux côtés et en direction de l'ouverture de décharge (4) respectivement une surface d'application (16', 16'').

9. Combinaison selon l'une des revendications 1 à 8, **caractérisée en ce que** l'au moins un élément de retenue (9, 10 ; 18) de premier ou deuxième type de l'élément rapporté (11, 17) de deuxième type coopère seulement avec la/les saillie/saillies (6) de deuxième type.

10. Combinaison selon l'une des revendications précédentes, **caractérisée en ce qu'**un élément rapporté (7), en particulier un élément rapporté d'épandeur d'épices en un premier matériau plastique est prévu en tant qu'élément rapporté de premier type et un élément rapporté, en particulier un élément rapporté de broyeur, est prévu en tant qu'élément rapporté (11, 17) de deuxième type, dans laquelle au moins une partie présentant l'élément de retenue (9, 18) de l'élément rapporté (11, 17) de deuxième type se compose d'un deuxième matériau plastique qui présente un module d'élasticité plus élevé que le premier matériau plastique.

11. Combinaison selon la revendication 10, **caractérisée en ce que** le premier matériau plastique présente un module d'élasticité entre 1000 N/mm² et 1950 N/mm², de préférence entre 1400 N/mm² et 1800 N/mm², et le deuxième matériau plastique présente un module d'élasticité entre 2000 N/mm² et 3900 N/mm², de préférence entre 2300 N/mm² et 2800 N/mm².

12. Combinaison selon l'une des revendications précédentes, **caractérisée en ce qu'**au moins un élément de retenue pouvant basculer de manière élastique dans une section de fixation de l'élément rapporté par rapport à une surface d'enveloppe, de préférence sensiblement en forme de languette, est prévu en tant qu'élément de retenue (9) de premier type.

13. Combinaison selon l'une des revendications précédentes, **caractérisée en ce qu'**au moins une rampe en saillie dans une section de fixation de l'élément rapporté (7) par rapport à une surface d'enveloppe est prévue en tant qu'élément de retenue (10) de deuxième type.
